# EUROPÄISCHE PATENTSCHRIFT

(11) **EP 2 510 807 B1**
(45) Veröffentlichungstag und Bekanntmachung des Hinweises auf die Patenterteilung: **29.11.2017**
(21) Anmeldenummer: 11003222.4
(22) Anmeldetag: 16.04.2011
(51) Int. Cl.: A23L 3/28, A23L 3/3454, A23K 40/10, A23K 30/00

(54) **Verfahren zur Herstellung von Lebens- und/oder Futtermittelprodukten**
Method for producing food and/or feed products
Procédé de fabrication de produits alimentaires et/ou de nourriture pour animaux

(43) Veröffentlichungstag der Anmeldung: 17.10.2012
(73) Patentinhaber: Deutsche Tiernahrung Cremer GmbH & Co. KG, 40221 Düsseldorf (DE)
(72) Erfinder: Arning, Ulrich, 40822 Mettmann (DE); Hötger, Siegfried, 48317 Drensteinfurt (DE)
(74) Vertreter: Rausch.Wanischeck.Brinkmann.Intellectual Property

(56) Entgegenhaltungen:
- EP-A1- 1 900 290
- DE-A1-102006 041 690
- DE-A1-102009 055 731
- DE-U1-202006 015 233
- US-A- 3 424 587
- VATANASUCHART N ET AL: "Molecular properties of cassava starch modified with different UV irradiations to enhance baking expansion", CARBOHYDRATE POLYMERS, APPLIED SCIENCE PUBLISHERS, LTD. BARKING, GB, Bd. 61, Nr. 1, 4. Juli 2005 (2005-07-04), Seiten 80-87, XP004932745, ISSN: 0144-8617, DOI: 10.1016/J.CARBPOL.2005.02.012

## Beschreibung

Die vorliegende Erfindung betrifft ein Verfahren zur Herstellung von Lebens- und/oder Futtermittelprodukten bei welchem aus einem Gemenge aus im Wesentlichen feinst körnigen Schüttgut und Wasser unter chemischer, mechanischer und/oder thermischer Behandlung Zwischen- und/oder Endprodukte erzeugt werden.

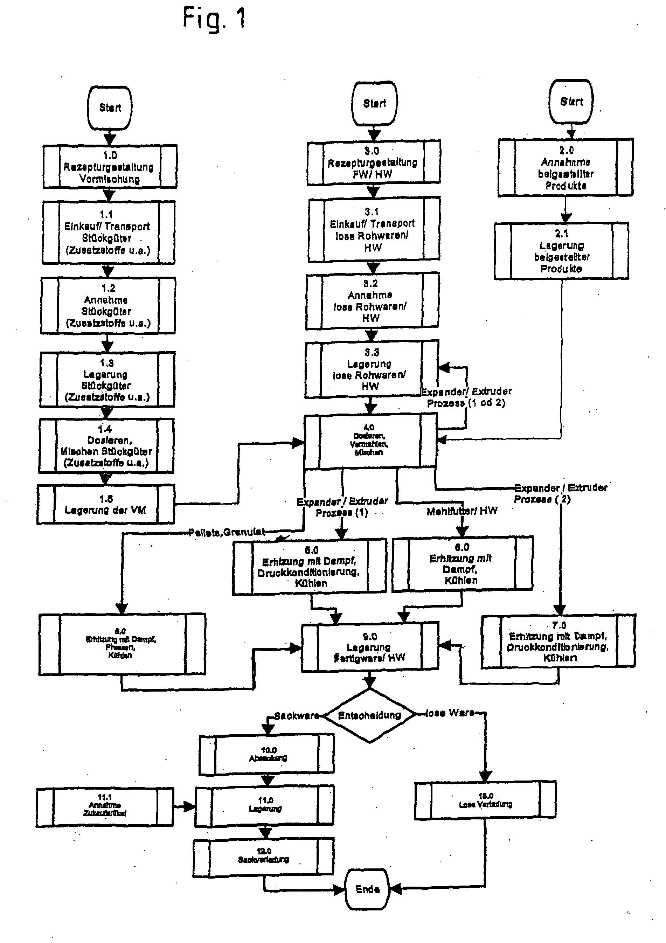

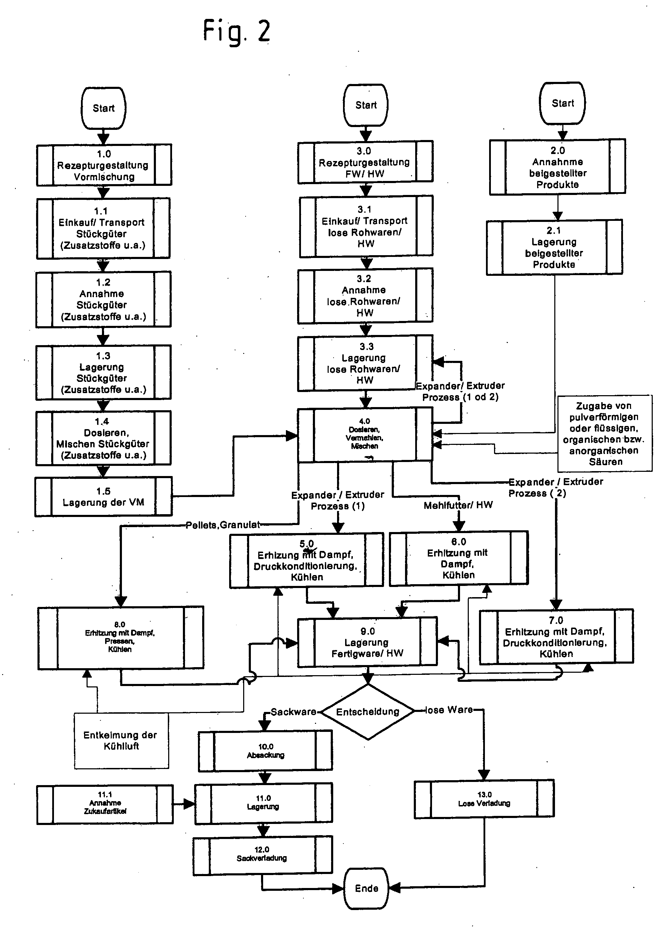

Ein ähnliches Verfahren ist in EP 1900 290 A1 beschrieben. Derartige Verfahren sind im Stand der Technik bekannt. Unter Bezug auf das Blockdiagramm gemäß Fig. 1 wird kurz auf die aus dem Stand der Technik bekannten Verfahren eingegangen. Zunächst werden die unterschiedlichen Produktgruppen gemäß den Rezepturen geplant, bestellt und beschafft. Die drei Beschaffungs- und Vorbereitungssäulen umfassen zum einen den Bereich der Zusatzstoffe, die in der Stufe 1.0 geplant werden und vorgemischt werden, gemäß 1.1 beschafft, transportiert, gemäß 1.2 angenommen und überprüft, gemäß 1.3 gelagert, gemäß 1.4. dosiert und gemischt und schlussendlich als Vormischung gemäß 1.5 gelagert werden.

Das Gleiche gilt für Beistellprodukte gemäß der Stufe 2.0 und 2.1.

Die Hauptsäule ist die Rezepturgestaltung 3.0, die Rohwarenbeschaffung gemäß 3.1, die Rohwarenannahme gemäß 3.2, die Lagerung der Rohwaren gemäß 3.3.

Alle vorbereiteten Stoffe also die eigentlichen Hauptwaren, die Vormischungen der Zusatzstoffe und die gelagerten beigestellten Produkte werden in der Stufe 4.0 dosiert, vermahlen und gemischt. Das Ergebnis wird dann je nach gewünschter Vertriebsform weiter behandelt. Soll ein Expandat/Extrudat gefertigt werden, wird gemäß Stufe 5.0 konditioniert, druckkonditioniert und gekühlt. Bei Mehlfutter gemäß Stufe 6.0 konditioniert und gekühlt. Ein Expandat/Extrudat wird gemäß Stufe 7.0 konditioniert, druckkonditioniert und gekühlt, während Pellets und Granulat gemäß Stufe 8.0 in Pressmehlkonditionierungen, Pressen und Kühlschritten verarbeitet werden.

Die fertige Ware wird gemäß 9.0 gelagert. Je nachdem, ob lose Verladung oder abgesackte Verladung erfolgt, werden die jeweiligen logistischen Säulen 10.0, 11.0, 12.0 bzw. 13.0 durchschritten.

Einschlägige nationale und internationale Verordnungen, beispielsweise die europäische Futtermittelhygieneverordnung definieren Anforderungen an den Hygienestatus derartiger Zwischen- und/oder Endprodukte. Insbesondere Salmonellen sind ein Thema, das die besondere Aufmerksamkeit der Behörden erregt hat.

Im Stand der Technik ist es grundsätzlich bekannt, entsprechende Produkte thermisch zu entkeimen. Die Produkte werden in einer Verfahrensstufe erhitzt. Anschließend erfolgt eine Rückkühlung. Bei der Rückkühlung wird Luft durch das Produkt geführt, die die Wärme abführt. Grundsätzlich ist es auch bekannt, dem Produkt in einer Verarbeitungsstufe Säure zuzufügen, um Keime abzutöten.

Es hat sich jedoch gezeigt, dass die Produkte in einem hohen Grad einer Rekontamination unterliegen. Die Vorrichtungen, Transportwege sowie hinzugefügtes Wasser, Nebenprodukte bis hin zur Luft tragen wieder Keime in die Produkte ein, die sich dann schädlich auswirken können. Ausgehend vom vorbeschriebenen Stand der Technik liegt der vorliegenden Erfindung die **Aufgabe** zugrunde, ein Verfahren bereitzustellen, welches im Rahmen der einschlägigen Verordnungen eine weitgehende Keimfreiheit der Produkte gewährleistet.

Zur technischen Lösung dieser Aufgabe wird ein Verfahren mit den Merkmalen des Anspruches 1 vorgeschlagen. Weitere Vorteile und Merkmale ergeben sich aus den Unteransprüchen.

Nach der erfindungsgemäßen Verfahrensdurchführung ist vorgesehen, dass in wenigstens einer Verfahrensstufe eine Entkeimung des Gemenges durch Zugabe von Säure durchgeführt wird. Zu diesem Zweck kommen organische oder anorganische Säuren zum Einsatz, die im Herstellungsprozess mit den zu hygienisierenden Produkten bzw. dem zu hygienisierenden Produkt vermischt werden. Die im Rahmen dieser Säureentkeimung eingesetzten Säuren sind solche mit einem pKₛ-Wert von > 1 und < 6.

Im Zuge der Produktherstellung erfolgt eine Vermahlung des Gemenges. In diesem Zusammenhang ist in erfindungsgemäßer Weise vorgesehen, dass eine Vermahlung des Gemenges in der Vermahlungsanlage unter Verwendung von Ansaugluft durchgeführt wird, die entkeimt ist. Nach der Erfindung erfolgt also eine Vermahlung mit vorentkeimter Ansaugluft. Auf diese Weise wird sichergestellt, dass keine Keime in das Gemenge über die beim Vermahlen benötigte Ansaugluft eingebracht werden.

Die zur Säureentkeimung vorgesehene Säure wird dem Gemenge vorzugsweise nach einer Vermahlung zugesetzt. Nach einer alternativen Verfahrensdurchführung kann die zur Säureentkeimung vorgesehenen Säuren dem Gemenge auch in der Vermahlungsanlage zugesetzt werden. In diesem Fall besteht der Vorteil, dass im Zuge der Vermahlung nicht nur eine Mahlzerkleinerung der Gemengebestandteile stattfindet, sondern auch eine Durchmischung der Gemengebestandteile mit den eingebrachten Säuren. Da die in erfindungsgemäßer Weise vorentkeimte Ansaugluft in die Vermahlungsanlage eingeführt wird, erfolgt keine Neu- oder Wiederverkeimung des säurebehandelten Gemisches.

Auf diese Weise wird eine Rekontamination weitgehend vermieden und die Herstellung eines im Wesentlichen keimfreien Zwischen- und/oder Endproduktes gewährleistet.

Gemäß einer Verfahrensergänzung kann in einer weiteren, der Säureentkeimung nachgeschalteten Verfahrensstufe eine zusätzliche Entkeimung des Gemenges stattfinden, und zwar durch Erhitzung. Gemäß dieser Verfahrensergänzung erfolgt der Säureentkeimung nachgeschaltet eine thermische oder hydrothermische Entkeimung des Gemenges. Dabei kommt im nachgeschalteten Verfahrensschritt der Kühlung ausschließlich vorentkeimte Kühlluft zum Einsatz. Es findet eine Entkeimung der zur Kühlung verwendeten Luft statt. Auf diese Weise wird insgesamt sichergestellt, dass ab dem Verfahrensschritt der Säureentkeimung das Gemisch nur noch in einer keimreduzierten Umgebung geführt und behandelt wird.

Anstelle einer zusätzlichen Entkeimung kann im Zuge der Verfahrensherstellung auch eine Entkeimung dadurch stattfinden, dass thermische Behandlungen des Gemenges stattfinden, beispielsweise durch Konditionierung oder Druckkonditionierung. Infolge dieser Behandlung findet bereits eine thermische und/oder hydrothermische Entkeimung statt. Die zur Kühlung nach Abschluss eines solchen Verfahrensschrittes eingesetzte Luft ist in erfindungsgemäßer Weise vorentkeimt, so dass ein Keimeintrag von außen unterbleibt.

Ob nun ein zusätzlicher Entkeimungsschritt durchgeführt wird oder es im Zuge der Verfahrensherstellung zu einer thermischen und/oder hydrothermischen Entkeimung bereits durch verfahrensbedingte Erwärmungen kommt, von entscheidender Bedeutung nach der Erfindung ist, dass die zur Kühlung eingesetzte Luft vorentkeimt ist, d. h. eine Vorentkeimung der Kühlluft durchgeführt wird.

Die wesentlichen Merkmale der Erfindung ergeben sich aus folgendem Flow-Chart:
Zunächst werden die unterschiedlichen Produktgruppen gemäß den Rezepturen geplant, bestellt und beschafft. Die drei Beschaffungs- und Vorbereitungssäulen umfassen zum einen den Bereich der Zusatzstoffe, die in der Stufe 1.0 geplant werden und vorgemischt werden, gemäß 1.1 beschafft, transportiert, gemäß 1.2 angenommen und überprüft, gemäß 1.3 gelagert, gemäß 1.4. dosiert und gemischt und schlussendlich als Vormischung gemäß 1.5 gelagert werden.

Das Gleiche gilt für Beistellprodukte gemäß der Stufe 2.0 und 2.1.

Die Hauptsäule ist die Rezepturgestaltung 3.0, die Rohwarenbeschaffung gemäß 3.1, die Rohwarenannahme gemäß 3.2, die Lagerung der Rohwaren gemäß 3.3.

Alle vorbereiteten Stoffe also die eigentlichen Hauptwaren die Vormischungen der Zusatzstoffe, die gelagerten beigestellten Produkte werden in der Stufe 4.0 dosiert, vermahlen und gemischt. Das Ergebnis wird dann je nach gewünschter Vertriebsform weiter behandelt. Soll ein Expandat/Extrudat gefertigt werden, wird gemäß Stufe 5.0 konditioniert, druckkonditioniert und gekühlt. Bei Mehlfutter gemäß Stufe 6.0 konditioniert und gekühlt. Ein Expandat/Extrudat wird gemäß Stufe 7.0 konditioniert, druckkonditioniert und gekühlt, während Pellets und Granulat in Pressmehlkonditionierungen, Pressen und Kühlschritten verarbeitet werden.

Die fertige Ware wird gemäß 9.0 gelagert. Je nachdem, ob lose Verladung oder abgesackte Verladung erfolgt, werden die jeweiligen logistischen Säulen 10.0, 11.0, 12.0 bzw. 13.0 durchschritten.

Erfindungsgemäß wird nun zum einen im Bereich der Verfahrensstufe 4 gemäß dem Ausführungsbeispiel Säure zugegeben. Dieses kann in pulver- oder flüssiger Form erfolgen. Es können organische und anorganische Säuren verwendet werden. In dieser Stufe erfolgt eine Entkeimung des Gemenges.

Weiterhin wird in diesem Ausführungsbeispiel nach der Konditionierung und vor der Einlagerung der Fertigware in den jeweiligen Kühlphasen als Kühlluft eine entkeimte Kühlluft verwendet, so dass in dieser Phase keine weiteren Keimbildungen stattfinden.

Das beschriebene Ausführungsbeispiel dient nur der Erläuterung und ist nicht beschränkend.

Der Umfang der vorliegende Erfindung wird nur durch die Ansprüche begrenzt.

## Patentansprüche

1. Verfahren zur Herstellung von Lebens- und/oder Futtermittelprodukten, bei welchem aus einem Gemenge aus im Wesentlichen feinst körnigen Schüttgut und Wasser' unter chemischer, mechanischer und/oder thermischer Behandlung Zwischen- und/oder Endprodukte erzeugt werden, **dadurch gekennzeichnet, dass**
- in wenigstens einer Verfahrensstufe eine Entkeimung des Gemenges durch Zugabe von Säure durchgeführt wird und
- eine Vermahlung des Gemenges mit vorentkeimter Ansaugluft durchgeführt wird.

2. Verfahren nach Anspruch 1, **dadurch gekennzeichnet, dass** in einer weiteren Verfahrensstufe eine zusätzliche Entkeimung des Gemenges durch Erhitzen durchgeführt wird, wobei zur Durchführung einer anschließenden Luftkühlung vorentkeimte Luft verwendet wird.

3. Verfahren nach Anspruch 1, **dadurch gekennzeichnet, dass** das Schüttgut in einem Vorzerkleinerungsverfahren in eine Atmosphäre entkeimter Luft geführt wird.

4. Verfahren nach einem der vorhergehenden Ansprüche, **dadurch gekennzeichnet, dass** die Luftentkeimung in einem UVC-Verfahren erfolgt.

## Claims

1. A method for the manufacture of food and/or feed products, in which intermediate and/or final products are produced from a mixture of essentially finest granular bulk material and water under a chemical, mechanical and/or thermal treatment, **characterized in that**
- in at least one process step the mixture will be sterilized by means of addition of acid and
- a grinding of the mixture with previously sterilized suction air will be carried out.

2. A method according to claim 1, **characterized in that** in another process step an additional sterilization of the mixture by means of heating up will be carried out, wherein previously sterilized air will be used for a subsequent air cooling.

3. A method according to claim 1, **characterized in that** the bulk material will be taken into an atmosphere of sterilized air in a pre-crushing process.

4. A method according to one of the preceding claims, **characterized in that** the air sterilization will be carried out in a UVC process.

## Revendications

1. Procédé de fabrication de denrées alimentaires et/ou d'aliments pour les animaux, dans lequel on fabrique des produits intermédiaires et/ou finaux à partir d'un mélange composé de solides en vrac essentiellement à grains très fins et d'eau à un traitement chimique, mécanique et/ou thermique, **caractérisé en ce qu'**
- on effectue une stérilisation du mélange par moyen d'addition d'acide dans au moins une étape de procédé et
- on effectue un processus de broyage du mélange à l'aide d'air d'aspiration précédemment stérilisé.

2. Procédé selon la revendication 1, **caractérisé en ce qu'**on effectue une stérilisation supplémentaire du mélange par moyen d'un réchauffement dans une autre étape de procédé, de l'air précédemment stérilisé étant utilisé pour effectuer un refroidissement à air subséquent.

3. Procédé selon la revendication 1, **caractérisé en ce que** les solides en vrac sont amenés dans une atmosphère d'air stérilisé dans une étape de broyage préalable.

4. Procédé selon l'une des revendications précédentes, **caractérisé en ce que** la stérilisation d'air s'effectue par moyen d'un procédé UVC.
